# EUROPEAN PATENT SPECIFICATION

(11) **EP 4 353 565 B1**
(45) Date of publication and mention of the grant of the patent: **23.07.2025**
(21) Application number: 22201344.3
(22) Date of filing: 13.10.2022
(51) Int. Cl.: B62B 3/02, B62B 7/04

(54) **A MULTIPURPOSE CARRIER AND METHOD FOR RECONFIGURING A MULTIPURPOSE CARRIER**
MEHRZWECKTRÄGER UND VERFAHREN ZUR NEUKONFIGURATION EINES MEHRZWECKTRÄGERS
CHARIOT POLYVALENT ET PROCÉDÉ DE RECONFIGURATION D'UN SUPPORT POLYVALENT

(43) Date of publication of application: 17.04.2024
(73) Proprietor: Thule Sweden AB, 335 04 Hillerstorp (SE)
(72) Inventor: Tjäderborn, Niclas, 55630 Jönköping (SE); Hak, Wilbert, 568 92 Skillingaryd (SE)
(74) Representative: Wallentin, Lars

(56) References cited:
- CA-A1- 2 559 638
- FR-A- 967 288
- US-A- 5 267 744
- US-A1- 2017 361 860

## Description

### TECHNICAL FIELD

The present invention relates to carriers which can be reconfigured for transporting one or more individuals, for transporting pets and/or for transporting cargo and for transporting by means of pushing, pulling or by towing for instance by a bicycle. More specifically, the present invention relates to a multipurpose carrier configured for transporting one or more passengers and/or cargo and to a method for reconfiguring a multipurpose carrier.

### BACKGROUND OF THE INVENTION

Multipurpose carriers, such as a reconfigurable bike trailer that can also be configured for use as a stroller and/or for towing when skiing etc., are becoming more increasingly more common items to facilitate a healthy, comfortable and environmentally friendly lifestyle.

Such carriers can serve a multitude of purposes, allowing transportation of children, pets and miscellaneous cargo during the daily commute and/or for recreation.

Multipurpose carriers are often collapsible, for instance for facilitating storing or for transportation of the carrier. Carriers are thus commonly provided with a chassis that is foldable, the chassis typically being a metal frame construction to which a textile and/or plastic cover is attached for forming seat bases and/or a passenger cabin. Similarly, one or several wheels of the carrier are usually removable not only for reducing the size of the carrier during storage but also as it may be required for a certain configuration of the carrier. For instance, when towing by bike it is under most circumstances required to remove the front wheel(s) of the carrier.

Manufacturers of multipurpose carriers constantly strive to improve usability and user friendliness of their products, especially during reconfiguration between the different uses of the multipurpose carrier.

US5267744 A relates to a wheel assembly mounted upon the tongue of a bicycle trailer which allows conversion of the bicycle trailer into a stroller.

FR967288 A relates to a baby carriage which has a dual purpose, it can be used either as a stroller or as a trailer attached to a bicycle.

US2017/361860 A1 relates to a child transport vehicle intended to be convertible between different transport modes and in particular to connectors that allow for the conversion between different transport modes.

CA2559638 A1 relates to a child transport vehicle intended to be convertible between different transport modes and in particular to connectors which permit removable vehicle attachments to be secured to the transport vehicle.

### SUMMARY OF THE INVENTION

In view of the above, an object of the present invention is to provide an improved multipurpose carrier which alleviates at least one of the drawbacks of the prior art. For example, an object of the present invention is to provide a multipurpose carrier where reconfiguration is facilitated between the different purposes of the multipurpose carrier. Further, it is an object of the teachings herein to provide a multipurpose carrier with improved user safety and improved user friendliness. Additionally, it is an object of the teachings herein to provide a multipurpose carrier having improved reliability and durability.

In a first aspect is a multipurpose carrier provided being configured for transporting one or more passengers and/or cargo by pushing or pulling the carrier, the carrier comprising:
- a chassis forming the load bearing structure of the carrier,
- at least three wheels associated with the chassis. At least one wheel forms part of a wheel assembly comprising a base in relation to which the wheel can rotate around at least a first wheel rotation axis. The wheel assembly is configured to be arranged in relation to the multipurpose carrier in at least a first orientation in relation to a wheel assembly rotation axis in which the wheel of the wheel assembly is arranged in a use state and in a second orientation and a third orientation around the wheel assembly rotation axis, the first orientation being separated from the second orientation by an angular separation of the wheel assembly around the wheel assembly rotation axis and the first orientation being separated from the third orientation by an angular separation of the wheel assembly around the wheel assembly rotation axis, and wherein the wheel assembly in the second orientation thereof is releasable from the multipurpose carrier and wherein the wheel assembly in the third orientation thereof is in a stowed state. The multipurpose carrier can thus easily be reconfigured by altering the orientation of the wheel assembly between a use state, a stowed state and a releasable state. The wheel assembly does not have to be removed from the carrier in order for it to be reoriented to the stowed state. Further, the wheel assembly as a whole can be released by simply reorienting it into the second orientation.

The first orientation and the second orientation of the wheel assembly may be separated angularly by between 30° and 120°, preferably approximately 90°. Naturally, it is conceivable that the first and second orientation may be separated with an angle outside of the aforementioned interval as well, however having a larger angular separation reduces the risk of improper arrangement of the wheel assembly in the first orientation. For instance, a small angular separation could generate a risk of a user arranging the wheel assembly incorrectly near the second orientation under the belief that it is in the first orientation such that it later unintentionally becomes detached from the carrier.

The third orientation of the wheel assembly may be angularly separated from the first position by approximately 180°. The wheel of the wheel assembly will thus be arranged in a stowed position and such that the risk of it ending up being in the way during use of the carrier is minimized.

The wheel assembly may be configured to be rotated from the first position to the second position and/or to the third position with the wheel of the wheel assembly moving along an arc only in an upwardly vertical direction. Accordingly, no part of the carrier needs to raised from the ground for changing the orientation of the wheel assembly. This is particularly beneficial when the carrier is used as a bike trailer as the carrier can be connected to the bike while being reconfigured such that the wheel assembly is reoriented for instance from the first orientation to the third orientation or vice versa. The need for the user to support the carrier during this process is also reduced.

The wheel assembly may comprise a tensioning element, the tensioning element being configured to provide a pretensioning force between the base and a corresponding wheel assembly attachment on the multipurpose carrier in a direction pressing the base against the wheel assembly attachment. The tensioning element may further support the wheel assembly as it is being rotated around the wheel assembly rotation axis. The tensioning element facilitates locking and unlocking the wheel assembly for reorientation thereof.

The wheel assembly may comprise a securing member configured to be moveable through a corresponding first opening in a wheel assembly attachment on the multipurpose carrier in at least the second orientation of the wheel assembly, and wherein the securing member in at least the first orientation of the wheel assembly is configured to be engageable against an abutment surface on the multipurpose carrier.

The securing member may be arranged on the tensioning element, thus rotating therewith during reorientation of the wheel assembly.

The abutment surface may be arranged on a resilient member being configured to be resiliently deformed by the engagement of the securing member upon provision of the pre-tensioning force by the tensioning element. The pretensioning force for attaching the wheel assembly and securing the wheel assembly in at least the first orientation and the second orientation may thus be controlled, in order to provide a secure attachment while avoiding unnecessarily high material stresses. The durability of the carrier is thus improved.

The first opening may be arranged in the resilient member and a second opening be provided in the wheel assembly attachment through which the first opening is accessible.

The securing member may be moveable through the second opening in any orientation of the wheel assembly around the wheel assembly rotation axis, thus facilitating securing that the wheel assembly is attached to the resilient member and not incorrectly against any other surface in the second opening. The second opening being arranged exteriorly of the first opening.

The wheel of the wheel assembly may be arranged in a castor configuration such that the wheel can rotate around a second wheel rotation axis in relation to the base. The multipurpose carrier may further comprise a rotation locking mechanism, the rotation locking mechanism comprising a locking member engageable in a corresponding first locking recess such that rotation of the wheel around the second wheel rotation axis is prevented, wherein the locking member is configured to be automatically engaged in the first locking recess at least when the wheel assembly is in a third orientation being angularly separated from the first position by approximately 180° and automatically disengaged from the first locking recess at least when the wheel assembly is in the first orientation. Accordingly, the wheel will be automatically locked and unlocked for rotation around the second wheel rotation axis by reorienting the wheel assembly. The wheel not rotating around the second wheel rotation axis while the wheel assembly is in the third orientation, i.e. stowed, reduces the risk of the wheel ending up in the way and obstructing the use of the carrier.

The locking member may be configured to be automatically engaged in and disengaged from the first locking recess by the force of gravity.

The locking member may comprise a plurality of friction reducing elements and/or wherein the locking member is manufactured from a material having a material density of between 3 g/cm³ and 15 g/cm³, preferably between 6 g/cm³ and 8 g/cm³, thus improving the automatic locking functionality of the rotation locking mechanism. The locking member being provided with friction reducing elements reduces the risk of detrimental effect from for instance dirt, which could for instance cause the locking member to become stuck.

In a second aspect is a method for reconfiguring a multipurpose carrier of the first aspect provided, the method comprising:
- adjusting a reorientation locking mechanism of the wheel assembly,
- arranging the wheel assembly in a first orientation in relation to a wheel assembly rotation axis corresponding to a use state, and/or
- arranging the wheel assembly in a second orientation corresponding to a releasable state of the wheel assembly from the multipurpose carrier, and/or
- arranging the wheel assembly in a third orientation corresponding to a stowed state of the wheel assembly.

### BRIEF DESCRIPTION OF THE DRAWINGS

With reference to the appended drawings, below follows a more detailed description of embodiments of the invention cited as examples.

In the drawings:
Figure 1 discloses a perspective view of a multipurpose carrier.
Figures 2a and 2b disclose a perspective detail view of multipurpose carrier and a wheel assembly.
Figure 3 discloses perspective detail view of a multipurpose carrier with a wheel assembly in a third orientation.
Figure 4 discloses a perspective view of a wheel assembly.
Figure 5 discloses an exploded view of a wheel assembly.
Figure 6 discloses a perspective view of a wheel assembly.
Figure 7a discloses a perspective detail view of a wheel assembly attachment.
Figure 7b discloses a perspective detail view of a wheel assembly.
Figure 7c discloses a perspective detail view of a wheel assembly attachment.
Figure 8 discloses a top view of a wheel assembly with the tensioning element in a retracted state.
Figure 9 discloses a top view of a wheel assembly with the tensioning element in a extended state.
Figure 10 discloses a side view of a wheel assembly.
Figure 11 discloses a perspective view of a wheel fork of a wheel assembly.
Figure 12 discloses a detail bottom view of a base of a wheel assembly
Figure 13 discloses a perspective view of a locking member.
Figures 14a to 14e discloses steps of a method for reconfiguring a multipurpose carrier.
Figure 15 discloses a schematic flowchart of a method for reconfiguring a multipurpose carrier.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The teachings herein will now be described more fully hereinafter with reference to the accompanying drawings, in which certain embodiments are shown. Like numbers refer to like elements throughout.

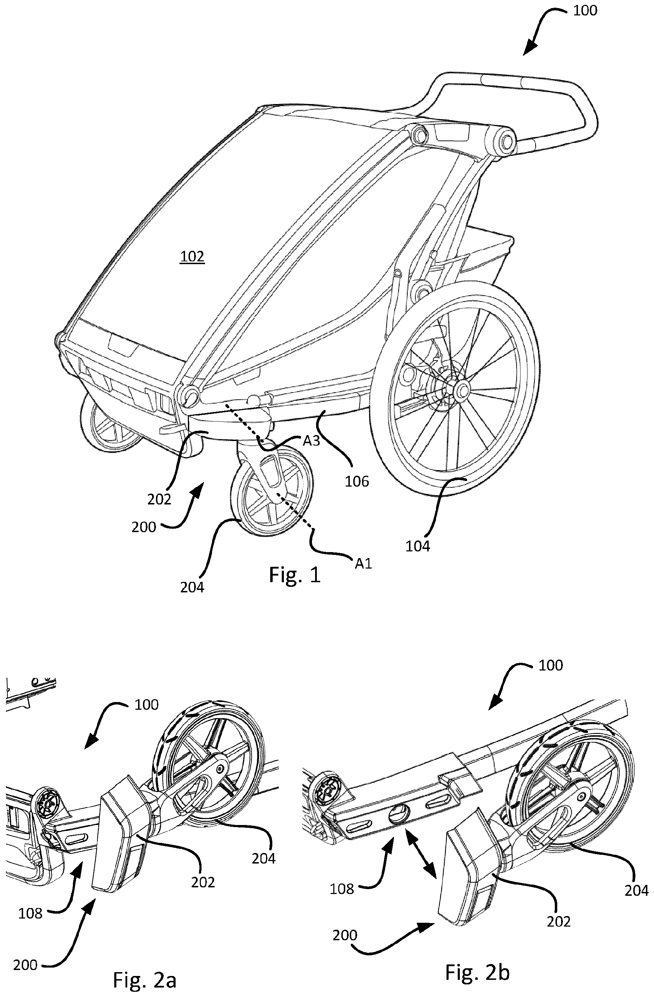

Figures 1, 2a and 2b discloses a perspective view of a multipurpose carrier 100 with a wheel assembly 200 in first orientation and in a second orientation respectively. A carrier 100 according to teachings herein is to be interpreted for instance as a bike trailer that can be towed by a bicycle and which can be converted for use as a stroller and/or for towing by a person wearing a harness. As such, the multipurpose carrier 100 allows reconfiguration of at least one of the wheels 104, 204 of the carrier 100. For instance, at least one of the wheels 104, 204 of the carrier 100 may be removable from the carrier 100 as may be required for instance when using the carrier 100 as a bike trailer. In some embodiments, all of the wheels 104, 204 of the carrier 100 can be removed from the carrier 100. The carrier 100 is illustrated as a four wheeled carrier 100 having two front wheels 204 and two rear wheels 104, the rear wheels 104 being larger than the front wheels 204. It is however to be realized that the teachings here could also be applied to three wheeled carriers, for instance being provided with only one front wheel.

The multipurpose carrier 100 may as is shown in comprise a chassis 106, the chassis 106 forming the load bearing structure of the carrier 100. The chassis 106 may be manufactured from a metal material such as aluminum and/or a plastic material and allow collapsing of the carrier 100 into a folded and less space consuming state. The carrier 100 may further be provided with a cover 102 forming a cabin for holding one or more passengers and/or cargo/pets etc. The cover 102 may be formed from one or more portions of textile and/or plastic material and may be removably attached to the chassis 106.

As further shown in Figures 1, 2a and 2b, at least one wheel 204 of the multipurpose carrier 100 forms part of a wheel assembly 200. The wheel assembly 200 is to be interpreted as a separate unit that is removably connectable by reorientation in relation to the multipurpose carrier 100. The multipurpose carrier 100 may in a preferred embodiment comprise two wheel assemblies 200 forming the front wheel pair of a four wheeled multipurpose carrier 100.

Each wheel assembly comprises a base 202 in relation to which the wheel 204 of the wheel assembly 200 can rotate around at least a first wheel rotation axis A1. The first wheel rotation axis A1 of each wheel assembly 200 forming the axis around which the associated wheel 204 rotates when the multipurpose carrier 100 is under movement, i.e. it is the center axis of the wheel 204.

Each wheel assembly 200 is configured to be arranged in relation to the multipurpose carrier 100 in at least a first orientation in relation to a wheel assembly rotation axis A3 in which the wheel 204 of the wheel assembly 200 is arranged in a use state as illustrated in Figure 1. Use state is to be interpreted as oriented with the wheel 204 of the multipurpose carrier 100 arranged such that it is configured to carry at least a part of the load of the carrier 100. The wheel assembly rotation axis A3 is the axis around which the wheel assembly can be reoriented for reconfiguration of the multipurpose carrier 100 for suiting the different purposes thereof.

Further, as shown in Figure 2a, each wheel assembly 200 may be configured to be oriented in a second orientation in relation to the wheel assembly rotation axis A3. The wheel assembly 200 in the second orientation thereof can be released and connected from/to the multipurpose carrier 100, as is illustrated in Figure 2b. The first orientation, shown in Figure 1, being separated from the second orientation by a second orientation angular separation of the wheel assembly 200 around the wheel assembly rotation axis A3. As illustrated in Figures 2a and 2b, the second orientation may be separated from the first orientation by between 30° and 120°, preferably approximately 90°. When in the second orientation, the wheel assembly 200 can be removed and attached to the multipurpose carrier 100.

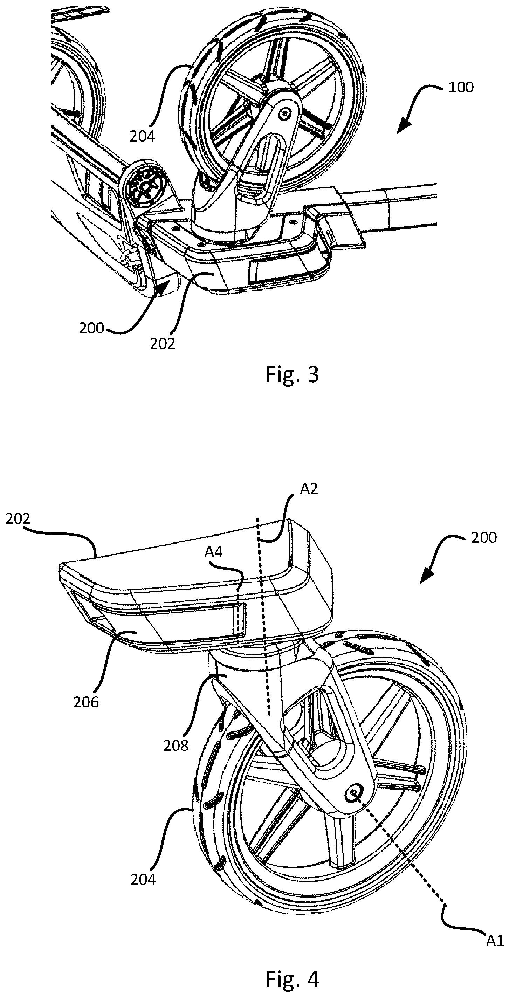

As is illustrated in Figure 3, each wheel assembly 200 may be configured to arranged in a third orientation around the wheel assembly rotation axis A3. The third orientation being separated from the first orientation by a third orientation angular separation of the wheel assembly 200 around the wheel assembly rotation axis A3. In the third orientation, the wheel assembly 200 is arranged in a stowed state. A stowed state is to interpreted as an orientation of the wheel assembly 200 in which the wheel 204 thereof is not configured to carry a load of the multipurpose carrier 100. As illustrated in Figure 3, the third orientation may be separated angularly by approximately 180° from the first orientation. The wheel assembly 200 is configured to be secured in the third orientation such that the orientation of the wheel assembly 200 cannot be unintentionally altered.

The wheel assembly 200 may further be configured to be arranged in a first orientation, a second orientation as defined herein and in a third orientation as defined herein. It is further to be realized that the second orientation is defined as an orientation in which the wheel assembly can be released from the multipurpose carrier 100. As such, more than one second orientation may be provided in a 360° rotation of the wheel assembly 200 around the wheel assembly rotation axis A3. Similarly, it is to be realized that the third orientation is defined as an orientation in which the wheel assembly 200 is stowed. Thus, more than one third orientation may be provided in a 360° rotation of the wheel assembly 200 around the wheel assembly rotation axis A3.

Further still, in an embodiment comprising a first orientation, a second orientation and a third orientation of the wheel assembly, each second orientation angular separation from the first orientation around the wheel assembly rotation axis A3 is different from each third orientation angular separation from the first orientation around the wheel assembly rotation axis A3.

The wheel assembly 200 may be configured to be attached to a wheel assembly attachment 108 formed on the carrier 100. The wheel assembly attachment 108 may be formed as an integral part of the chassis 106 and/or as a separate part connected thereto such that it allows transmission of the weight of the carrier 100 via the wheel assembly attachment 108 to the wheel assembly 200.

Figure 4 discloses a perspective view of a wheel assembly 200. As mentioned, each wheel assembly comprises a base 202. The base 202 forms the portion of the wheel assembly 100 that is configured for connection to the multipurpose carrier 100. The base 202 may be formed from a plastic and/or metallic material as realized by a person skilled in the art.

The wheel 204 of the wheel assembly 200 may be connected to the base 202 in a castor configuration, the wheel assembly 200 further comprising a wheel fork 208 to which the wheel 204 is mounted. The wheel fork 208 preferably being rotatably mounted to the base 202 such that the wheel fork 208 and the associated wheel 204 can rotate around a second wheel rotation axis A2 in relation to the base 202.

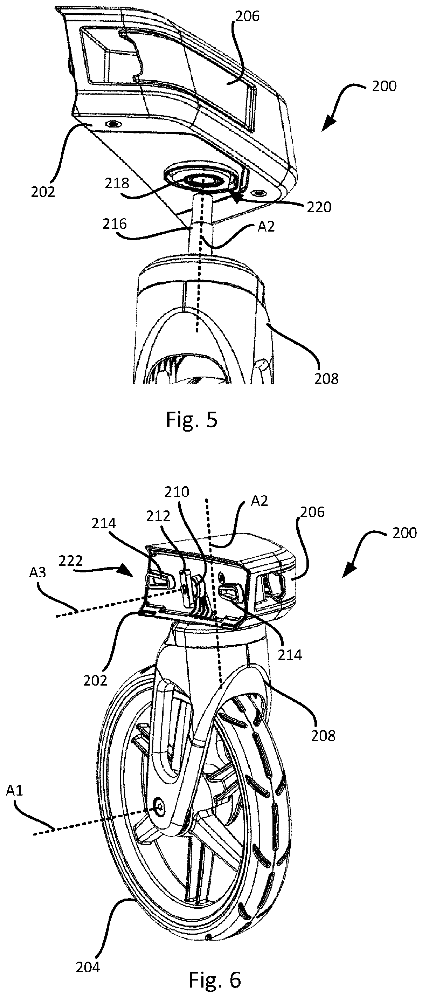

Figure 5 shows an exploded view of a wheel assembly 200, where it is illustrated how the wheel fork 208 may be connected to the base 202. As illustrated, a shaft 216 may be provided which is connected to the wheel fork 208 and further connected to a bearing 218 arranged in a corresponding opening 220 in the base 202. The bearing 218 provides reduced friction as the wheel fork 208 is rotated around the second wheel rotation axis A2 in relation to the base 202. The bearing may be a radial ball bearing or another type of bearing suitable for the purpose, as realized by a person skilled in the art. The shaft 216 may be rotationally fixed in relation to the wheel fork 208, such that the rotation is provided by the bearing 218 in the base 202. Alternatively, a bearing (not shown) may also be provided between the shaft 216 and the wheel fork 208 thus providing relative rotation also between the shaft 216 and the wheel fork 208. In one embodiment, the bearing 218 is provided in the wheel fork 208 while the shaft 216 is arranged rotationally fixed in relation to the base 202. As the entire wheel assembly 200 can be reoriented in relation to the multipurpose carrier 100 and/or removed therefrom, it is under normal use not necessary to remove the wheel fork 208 from the base 202. The bearing 218 and the shaft 216 will thus be subjected less to the surroundings and thus less to dirt or debris, which reduces the wear of the bearing 218 and improves durability.

Figure 6 shows a perspective view of a wheel assembly 200. As illustrated in Figure 6, the wheel assembly 200 may comprise a tensioning element 210 which may be connected to a lever 206. The lever 206 being configured to achieve axial movement of the tensioning element 210. The tensioning element 210 may in addition to the foregoing be considered a reorientation locking mechanism 210, locking the wheel assembly in each orientation and unlocking the wheel assembly 200 such the orientation thereof can be changed.

The axial extension of the tensioning element 210 defines the wheel assembly rotation axis A3, as the wheel assembly 200 may be configured to rotate around the tensioning element 210. Further, the tensioning element 210 is configured to be reciprocally moveable axially along the wheel assembly rotation axis A3 by means of a corresponding movement of the lever 206. The tensioning element 210 is configured to provide a pretensioning force between the base 202 and the wheel assembly attachment 108 on the multipurpose carrier 100 in a direction pressing the base 202 against the wheel assembly attachment 108. The tensioning element 210 thus has a retracted state and an extended state, as will be elaborated further on below.

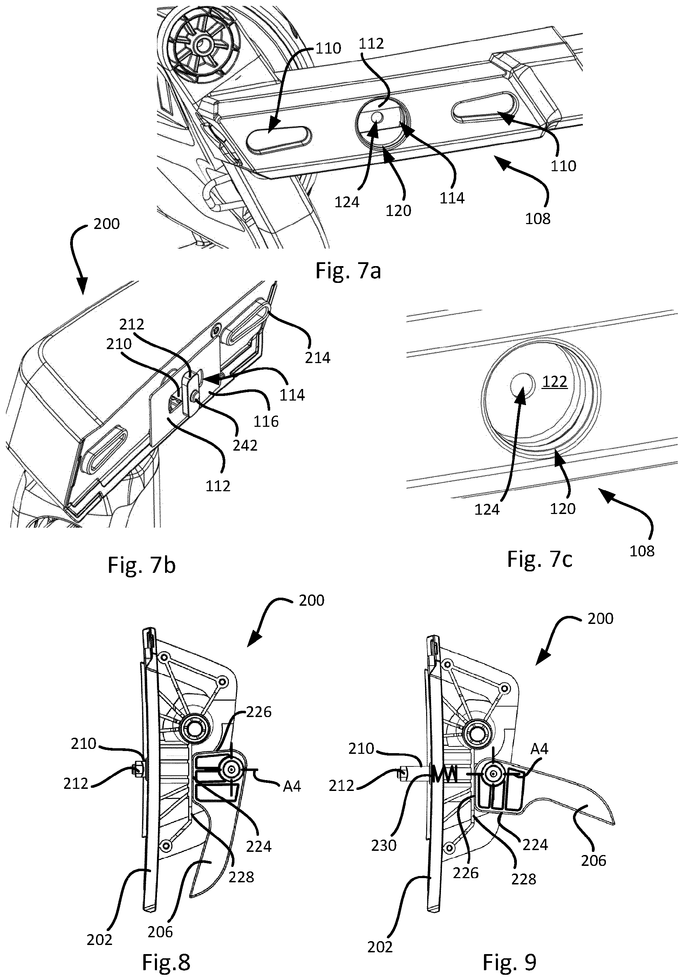

Moreover, as is further illustrated in Figure 6, the base 202 may be provided with at least one protrusion 214 being arranged protruding towards the multipurpose carrier 100. Preferably are two protrusions 214 provided, one on each side of the tensioning element 210. Each protrusion 214 is configured to cooperate and engage with a corresponding recess 110 in the wheel assembly attachment 108 (shown in Figure 7a), thus forming a locking effect for preventing relative rotation between the base 202 and the wheel assembly attachment 108 when the tensioning element 210 is in the retracted state. The mutual engagement of each protrusion 214 and each recess 110 reduces the strain on the tensioning element 210 as any rotational force exerted on the wheel assembly 200 will be taken up or at least reduced by the protrusion 214 and the corresponding recess 110.

Further shown in Figure 6 is that the wheel assembly 200 may comprise a securing member 212. The securing member 212 is preferably arranged on the tensioning element 210 and protruding therefrom. The securing member 212 may in a preferred embodiment be arranged such that it is rotationally fixed in relation to the base 202, thus rotating therewith as the wheel assembly 200 is reoriented from the first to the second and/or third orientation or vice versa.

The securing member 212 may as is shown be arranged and configured such that it protrudes outside of the circumference of the adjacent peripheral surface of the tensioning element 210, the securing member 212 being configured to be arranged in engagement against an abutment surface 116 whereby the tensioning element 210 provides the pretensioning force in at least the first orientation and optionally in the third orientation of the wheel assembly 200.

The securing member 212 is shown being essentially rectangular in shape, it is however to be realized that the securing member 212 may be provided with other shapes as well. The securing member 212 is configured to be moveable through a corresponding first opening 114 (shown in Figure 7a) in the wheel assembly attachment 108 on the multipurpose carrier 100 in at least the second orientation of the wheel assembly 200. With reference to Figure 7a, the first opening 114 corresponding to the securing member 212 is to be interpreted as that the first opening 114 and the securing member 212 are mutually formed such that the wheel assembly 200 can be secured in the first orientation thereof and released in the second orientation and/or secured in the third orientation of the wheel assembly 200. Accordingly, a plurality of shapes of the first opening 114 as well as of the securing member 212 is possible within the scope of this disclosure.

The securing member 212 is in at least the first orientation of the wheel assembly 200 configured to be engageable against an abutment surface 116, shown in Figure 7b, on the multipurpose carrier. The abutment surface 116 is arranged facing away from the base 202 of the wheel assembly 200 and is preferably arranged interiorly of the wheel assembly attachment 108.

As is illustrated in Figure 7b, the abutment surface 116 may be arranged on a resilient member 112. The resilient member 112 may be formed by a spring element such as a blade spring. In Figure 7b, the resilient member 112 is isolated from the wheel assembly attachment 108 for illustrating the function thereof and the engagement of the securing member 212. It is also conceivable that the resilient member is formed from an elastic plastic and/or polymeric material. The resilient member 112 will, by resiliently deforming when exerted to the securing member 212 engagement, provide reliable pretensioning force while reducing the risk that any undesired material strain forms due to the contact between the securing member 212 and the abutment surface 116.

As mentioned, the resilient member 112 is configured to be resiliently deformed by the engagement of the securing member 212 upon provision of the pre-tensioning force by the tensioning element 210. The resilient member 112 may further be integrally formed with the wheel assembly attachment 108 or, as illustrated in Figures 7a and 7b, be formed separately.

Further illustrated in Figures 7a and 7b is that the first opening 114 may be arranged in the resilient member 112, the first opening 114 being configured to receive the tensioning element 210 comprising the securing member 212.

Additionally, it is in Figures 7a and 7c illustrated how a second opening 120 may be provided in the wheel assembly attachment 108 through which the first opening 114 is accessible. In Figure 7c, the resilient member 112 is omitted for clarity. The securing member 212 may be moveable through the second opening 120 in any orientation around the wheel assembly rotation axis A3 of the wheel assembly 200. The second opening 120 may be formed in the wheel assembly attachment 108, as an integral part thereof. The wheel assembly attachment 108 may be formed from a plastic and/or metallic material. The second opening 120 being configured to allow passage of the securing member 212 in any orientation of the wheel assembly 200 around the wheel assembly rotation axis A3 facilitates attachment of the wheel assembly 200 to the multipurpose carrier 100. Further, the risk of incorrect attachment of the wheel assembly 200 to the multipurpose carrier 100 is reduced, for instance in an orientation where the securing member 212 is not in contact with the abutment surface 116 on the resilient member 114 but instead abuts directly against the wheel assembly attachment 108.

Additionally, as illustrated in Figure 7c, the wheel assembly attachment 108 may comprise a bottom cavity 122 arranged behind the resilient member 112. The cavity 122 is configured to allow rotation of the securing member 122 therein.

Furthermore, as illustrated in Figures 7b and 7c, the tensioning element 210 may be provided with a support 242. The support 242 is preferably arranged protruding coaxially with the wheel assembly rotation axis A3 on the side of the tensioning element 210 intended to be facing towards the wheel assembly attachment 108. The support 242 is configured to cooperate with a support recess 124, shown in Figure 7c, such that rotation of the wheel assembly 200 around the wheel assembly rotation axis A3 is facilitated. This aids the user in the reorientation of the wheel assembly 200. In one embodiment, the securing member 212 can only be rotated in relation to the wheel assembly attachment 108 when the support 242 is arranged in the support recess 124. More particularly, unless the support 242 is aligned with the support recess 124, the securing member 212 cannot be moved entirely through the first opening 114 in the resilient member 112 and will thus make contact with the first opening 114 upon rotation of the wheel assembly 200. Moreover, contact between the resilient member 112 abutment surface 116 and the securing member 212 may prevent removal of the support 242 from the support recess 124 when the wheel assembly 200 is not arranged in the second orientation. Accordingly, the support 242 and the support recess 124 along with the securing member 212 and the resilient member 112 guides the rotation of the wheel assembly 200 around the wheel assembly rotation axis A3 and keeps the wheel assembly 200 correctly aligned with wheel assembly attachment 108 as it is being rotated between the first and third orientation of the wheel assembly 200. Upon rotation of the wheel assembly 200 with the support 242 in the support recess 124, the securing member 212 rotates unrestricted in the bottom cavity 122 of the wheel assembly attachment 108 preferably without making contact with the walls along the periphery of the bottom cavity 122.

Figures 8 and 9 show a top view of the wheel assembly 200. In Figure 8, the wheel assembly 200 is shown with the tensioning element 210 in the retracted state as controlled by the lever 206. The lever 206 is pivotable around a lever rotation axis A4 for setting the tensioning element 210 in the retracted state or in the extended state as illustrated in Figure 9. The lever 206 is pivotably connected to the tensioning element 210 in the lever rotation axis A4. The lever 206 comprises a first contact surface 224, the perpendicular distance therefrom to the lever rotation axis A4 defining the retracted state of the tensioning element 210. The first contact surface 224 is arranged in contact with a lever abutment surface 228 on the base 202 when the tensioning element 210 is in the retracted state. Furthermore, the lever 206 comprises a second contact surface 226 angularly offset from the first contact surface 224 around the lever rotation axis A4, the perpendicular distance from the second contact surface 226 to the lever rotation axis A4 defining the extended state of the tensioning element 210 and is thus shorter than the corresponding distance between the first contact surface 224 and the lever rotation axis A4. The second contact surface 226 is arranged in contact with the lever abutment surface 228 on the base 202 when the tensioning element 210 is in the retracted state.

Additionally, as shown in Figure 9, a biasing member 230 may be provided between the tensioning element 210 and the base 202. The biasing member 230, which may be formed by a coil spring or another element of similar function, is configured to bias the tensioning element 210 towards the extended position. The biasing member 230 thus facilitates keeping the lever 206 in contact with the lever abutment surface 228 during the movement of the lever 206, thus facilitating controlling the movement of the lever 206. Further, the biasing member 230 facilitates attachment and release of the wheel assembly 200 to/from the multipurpose carrier 100 as it keeps the tensioning element 210 in the extended state without user interaction when the lever 206 is the corresponding position with the second contact surface 226 in contact with the lever abutment surface 228.

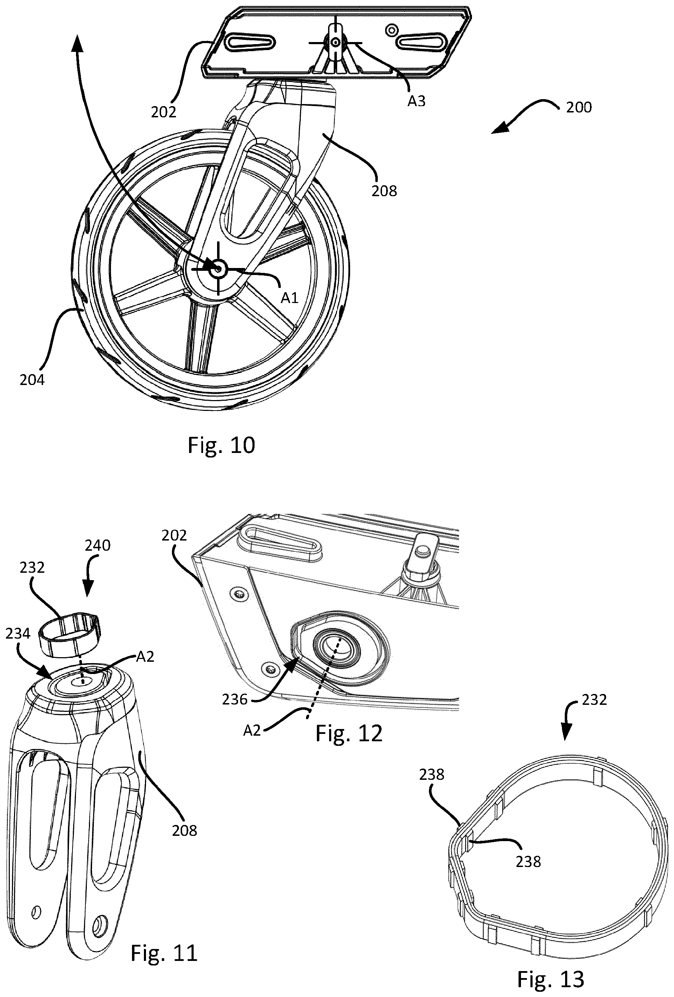

Figure 10 shows a side view of a wheel assembly 200 from the side intended to face the multipurpose carrier 200. It is illustrated how by rotation around the wheel assembly rotation axis A3, the wheel assembly 200 is configured to be rotated from the first orientation illustrated in Figure 10 to the second orientation as shown in Figure 2 and/or to the third orientation as shown in Figure 3 with the wheel 204 of the wheel assembly 200 moving along an arc, illustrated by the arrow in Figure 10, only in an upwardly vertical direction. As such, the wheel assembly 200 can be brought from the first orientation to the second and/or third orientation and vice versa without having to lift the multipurpose carrier 100. This is of special importance when the multipurpose carrier 100 is connected to a bicycle by means of a tow bar, as lifting of the multipurpose carrier 100 under such circumstances may result in that the bicycle falls over. Consequently, providing a wheel assembly 200 according to the foregoing facilitates connection of the multipurpose carrier 100 to a bicycle as the wheel assembly 200 can be removed or stowed after the connection is established between the bicycle and the multipurpose carrier 100. The user as a result does not have to support the weight of the multipurpose carrier 100 in the process of connecting or releasing the carrier 100 to/from the bicycle as the wheel assembly 200 can be removed/connected and stowed without having to lift any part of the carrier 100.

In the following will simultaneous reference be made to Figures 11 to 13, of which Figure 11 shows a perspective view of the wheel fork 208 of the wheel assembly 200, Figure 12 shows a detail bottom view of the base 202 of the wheel assembly 200 and Figure 13 shows a perspective view of a locking member 232. The wheel assembly 200 may be provided with a rotation locking mechanism 240. The rotation locking mechanism 240 is configured to prevent relative rotation between the wheel 204, more particularly between the wheel fork 208, and the base 202 around the second wheel rotation axis A2 at least when the wheel assembly 200 is in the third orientation which is angularly separated from the first orientation by approximately 180°. Accordingly, the rotation of the wheel 204 and/or the wheel fork 208 around the second wheel rotation axis A2 may be automatically locked when the wheel assembly 200 is in or near the third position. This facilitates placing the wheel assembly 200 in the stowed position and reduces the risk of the wheel 204 protruding outside of the periphery of the carrier 100.

The rotation locking mechanism 240 is further configured to be automatically disengaged when the wheel assembly 200 is arranged at least in the first orientation, thus allowing turning and rotation of the wheel 204 and the wheel fork 208 around the second wheel rotation axis A2.

The rotation locking mechanism 240 may comprise a locking member 232 engageable in a corresponding first locking recess 236 such that rotation of the wheel 204 and/or the wheel fork 208 around the second wheel rotation axis A2 is prevented. The locking member 232 is configured to be automatically engaged in the first locking recess 236 at least when the wheel assembly is in the third orientation and automatically disengaged from the first locking recess 236 at least when the wheel assembly 200 is in the first orientation.

The locking member 232 may as is illustrated be formed extending around the second wheel rotation axis A2. The locking member 232 is provided with a shape and/or arrangement thereof which by cooperation with the first locking recess 236 prevents rotation of the wheel fork 208. For instance, the locking member 232 and the corresponding first locking recess 236 may be circular but arranged radially offset in relation to the second wheel rotation axis A2. Further, the locking member 232 and the corresponding first locking recess 236 may be provided with a non-circular shape as illustrated in Figures 11 to 13 such that the locking member 232 only can be arranged in the first locking recess 236 in one relative orientation of the wheel 204 / wheel fork 208 and the base 202.

The locking member 232 is configured to rotate with the wheel 204 and/or with the wheel fork 208 around the second wheel rotation axis A2. The locking member 232 may as is illustrated in Figure 11 be arranged in a second locking recess 234, the second locking recess 234 being arranged in the wheel fork 208. The second locking recess 234 is configured to accommodate the locking member 232 such that it does not engage with the first locking recess 236 when the wheel assembly 200 is at least in the first orientation. The second locking recess 234 may be configured to have a depth essentially corresponding to or be larger than the height of the locking member 232 such that the locking member 232 does not protrude outside of the second locking recess 234 when fully inserted therein.

The first locking recess 236 is configured to partially accommodate the locking member 232 such that the locking member 232 is configured to be arrangeable in simultaneous engagement with both the first locking recess 236 and the second locking recess 234 at least when the wheel assembly 200 is in the third orientation. Preferably, the depth of the first locking recess 236 is less than the height of the locking member 232 as measured along the second wheel rotation axis A2. Accordingly, the locking member 232 will not be moved out of engagement from the second locking recess 234 even if the locking member 232 is fully inserted into the first locking recess 236.

Preferably, the locking member 232 is configured to be automatically engaged in and disengaged from the first locking recess 236 by the force of gravity. The locking member 232 thus moving out of the second locking recess 234 when the force of gravity overcomes the friction force between the locking member 232 and the second locking recess 234. The locking member 232 is moved into the first locking recess 236 when the relative orientation around the second wheel rotation axis A2 of the wheel 204 and/or the wheel fork 208 and the base 202 is such that the first and second locking recesses 236, 234 are aligned.

To facilitate the gravity induced movement of the locking member 232, the locking member 232 may be provided with a plurality of friction reducing elements 238. The friction reducing elements 238 may be distributed around the interior and/or exterior periphery of the locking member 232. Each friction reducing element 238 is formed by a protrusion preferably having an extension in the insertion direction of the locking member 232 into each of the first and second locking recess 236, 234. The friction reducing elements 238 reduces the contact surface between the locking member 232 and the first and second locking recesses 236, 234 respectively, thus reducing the retaining force due to friction between locking member 232 and the base 202. The friction reducing elements 238 further reduces the risk of dirt becoming wedged between the locking member 232 and the first and second locking recesses 236, 234 respectively.

The locking member 232 may be manufactured from a material having a material density of between 3 g/cm³ and 15 g/cm³, preferably between 6 g/cm³ and 8 g/cm³. The locking member 232 may be manufactured from a metallic material such as zinc. Other materials are naturally also considered, such as plastic and/or composite materials.

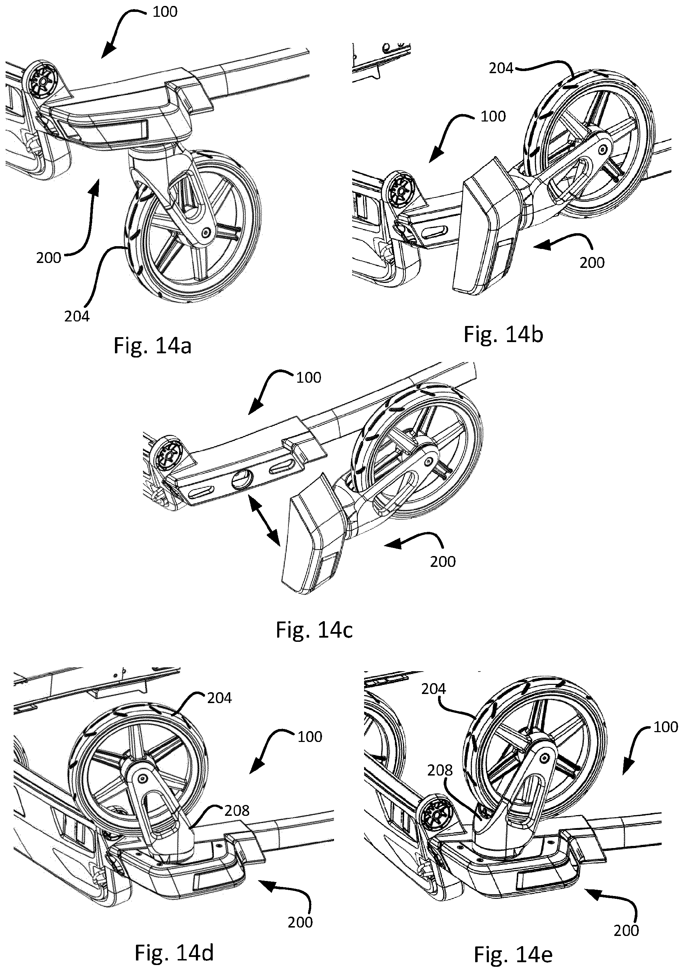

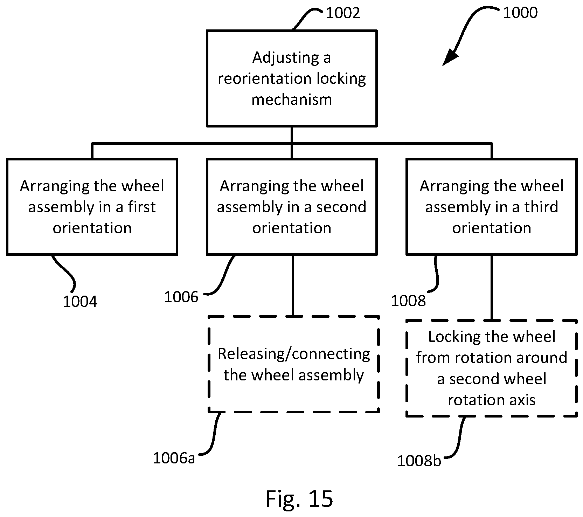

Figures 14a to 14e along with Figure 15 illustrate a method 1000 for reconfiguring a multipurpose carrier 100 according to the teachings herein. The method 1000 comprises adjusting 1002 a wheel assembly locking mechanism 210, such as the tensioning element 210 of the wheel assembly 200, arranging 1004 the wheel assembly 200 in a first orientation in relation to a wheel assembly rotation axis A3 corresponding to a use state, arranging 1006 the wheel assembly 200 in a second orientation corresponding to a releasable state of the wheel assembly 200 from the multipurpose carrier 100 and/or arranging 1008 the wheel assembly 200 in a third orientation corresponding to a stowed state of the wheel assembly 200. The first orientation being separated from the second orientation and the third orientation by an angular separation of the wheel assembly around the wheel assembly rotation axis A3.

The first orientation of the wheel assembly 200 is illustrated in Figure 14a and is the orientation of the wheel assembly 200 which is the use state of the carrier 100, i.e. when the carrier 100 is to be used for carrying a load at least partially supported by means of the wheel assembly 200.

The second orientation in which the wheel assembly 200 is releasable from the multipurpose carrier 100 is illustrated in Figure 14b in which the wheel assembly 200 is rotated around the wheel assembly rotation axis A3 between 30° and 120°, preferably approximately 90° from the first orientation. It is to realized that the second orientation may per definition also be arranged rotated approximately 180° from the orientation illustrated in Figure 14b, i.e. such that the wheel 204 is arranged forwardly of the base 202. In other words, more that one second orientation may be provided. As is illustrated in Figure 14c, the arranging 1006 of the wheel assembly 200 in the second orientation may further comprise releasing/connecting 1006a the wheel assembly 200 from the carrier 100. When arranged in the second orientation, the wheel assembly 200 is releasable/connectable to the carrier 100 by a lateral movement as illustrated in Figure 14c.

Figure 14d illustrates the wheel assembly being arranged 1008 in the third orientation, the third orientation of the wheel assembly 200 being angularly separated from the first position by approximately 180°. In the third orientation, the wheel assembly 200 is in a stowed position as described in the foregoing.

Arranging 1008 the wheel assembly in the third orientation may further comprise locking 1008a the wheel 204 from rotation around a second wheel rotation axis A2 as is illustrated in Figures 14d and 14e. Locking 1008a the wheel 204 from rotation may comprise arranging the wheel 204 in a predetermined orientation around the second wheel rotation axis A2 such that a rotation locking mechanism 240 is engaged, as outlined in the foregoing in conjunction with the description of Figures 11 to 13, and thus prevents further rotation of the wheel 204 and/or the wheel fork 208 around the second wheel rotation axis A2. Correspondingly, the rotation locking mechanism 240 may be configured to disengage automatically once the wheel assembly 200 is oriented near or in the first orientation thus allowing rotation of the wheel 204 / wheel fork 208 around the second wheel rotation axis A2.

The adjusting 1002 of the reorientation locking mechanism 210 of the wheel assembly 200 may be performed before/during/after each change of orientation as described in relation to Figures 8 and 9 in the foregoing. More particularly, the adjusting 1008 the reorientation locking mechanism 210 may comprise setting the tensioning element 210 in an extracted state before changing from the first orientation to the second and/or third orientation of the wheel assembly 200 and from the third orientation to the second and/or first orientation of the wheel assembly 200. The adjusting 1008 the reorientation locking mechanism 210 may further comprise setting the tensioning element 210 in a retracted state when the wheel assembly 200 has reached either of the first and third orientation thus preventing the wheel assembly 200 from unintentionally changing its orientation around the wheel assembly rotation axis A3.

It is to be understood that the present invention is not limited to the embodiments described above and illustrated in the drawings; rather, the skilled person will recognize that many changes and modifications may be made within the scope of the appended claims.

## Claims

1. A multipurpose carrier (100) configured for transporting one or more passengers and/or cargo by pushing or pulling the carrier (100), the multipurpose carrier (100) comprising:
- a chassis (106) forming the load bearing structure of the carrier (100),
- at least three wheels (104, 204) associated with the chassis (106), wherein at least one wheel (204) forms part of a wheel assembly (200) comprising a base (202) in relation to which the wheel (204) can rotate around at least a first wheel rotation axis (A1), wherein the wheel assembly (200) is configured to be arranged in relation to the multipurpose carrier (100) in at least a first orientation in relation to a wheel assembly rotation axis (A3) in which the wheel (204) of the wheel assembly (200) is arranged in a use state and in a second orientation and a third orientation around the wheel assembly rotation axis (A3), the first orientation being separated from the second orientation by an angular separation of the wheel assembly (200) around the wheel assembly rotation axis (A3) and the first orientation being separated from the third orientation by an angular separation of the wheel assembly (200) around the wheel assembly rotation axis (A3), and wherein the wheel assembly (200) in the second orientation thereof is releasable from the multipurpose carrier (100) and wherein the wheel assembly (200) in the third orientation thereof is in a stowed state.

2. The multipurpose carrier (100) according to claim 1, wherein the first orientation and the second orientation of the wheel assembly (200) is separated angularly by between 30° and 120°, preferably approximately 90°.

3. The multipurpose carrier (100) according to claim 1 or 2, wherein the third orientation of the wheel assembly (200) is angularly separated from the first position by approximately 180°.

4. The multipurpose carrier (100) according to any one of the preceding claims, wherein the wheel assembly (200) is configured to be rotated from the first position to the second position and/or to the third position with the wheel (204) of the wheel assembly (200) moving along an arc only in an upwardly vertical direction.

5. The multipurpose carrier (100) according to any one of the preceding claims, wherein the wheel assembly (200) comprises a tensioning element (210), the tensioning element (210) being configured to provide a pretensioning force between the base (202) and a corresponding wheel assembly attachment (108) on the multipurpose carrier (100) in a direction pressing the base (202) against the wheel assembly attachment (108).

6. The multipurpose carrier (100) according to any one of the preceding claims, wherein the wheel assembly (200) comprises a securing member (212) configured to be moveable through a corresponding first opening (114) in a wheel assembly attachment (108) on the multipurpose carrier (100) in at least the second orientation of the wheel assembly (200), and wherein the securing member (212) in at least the first orientation of the wheel assembly (200) is configured to be engageable against an abutment surface (116) on the multipurpose carrier (100).

7. The multipurpose carrier (100) according claim 6 when dependent on claim 5, wherein the securing member (212) is arranged on the tensioning element (210).

8. The multipurpose carrier (100) according to claim 7 or 6 when dependent on claim 5, wherein the abutment surface (116) is arranged on a resilient member (112) being configured to be resiliently deformed by the engagement of the securing member (212) upon provision of the pre-tensioning force by the tensioning element (210).

9. The multipurpose carrier (100) according to claim 8, wherein the first opening (114) is arranged in the resilient member (112) and a second opening (120) is provided in the wheel assembly attachment (108) through which the first opening (114) is accessible.

10. The multipurpose carrier (100) according to claim 9, wherein the securing member (212) is moveable through the second opening (120) in any orientation of the wheel assembly (200) around the wheel assembly rotation axis (A3).

11. The multipurpose carrier (100) according to any one of the preceding claims, wherein the wheel (204) of the wheel assembly (204) is arranged in a castor configuration such that the wheel (204) can rotate around a second wheel rotation axis (A2) in relation to the base (202).

12. The multipurpose carrier (100) according to claim 11, further comprising a rotation locking mechanism (240), the rotation locking mechanism (240) comprising a locking member (232) engageable in a corresponding first locking recess (236) such that rotation of the wheel (204) around the second wheel rotation axis (A2) is prevented, wherein the locking member (232) is configured to be automatically engaged in the first locking recess (236) at least when the wheel assembly (200) is in a third orientation being angularly separated from the first orientation by approximately 180° and automatically disengaged from the first locking recess (236) at least when the wheel assembly (200) is in the first orientation.

13. The multipurpose carrier (100) according to claim 12, wherein the locking member (232) is configured to be automatically engaged in and disengaged from the first locking recess (236) by the force of gravity.

14. The multipurpose carrier (100) according to claim 12 or 13, wherein the locking member (232) comprise a plurality of friction reducing elements (238) and/or wherein the locking member (232) is manufactured from a material having a material density of between 3 g/cm³ and 15 g/cm³, preferably between 6 g/cm³ and 8 g/cm³.

15. A method (1000) for reconfiguring a multipurpose carrier (100) according to any one of the preceding claims, the method (1000) comprising the steps of:
- adjusting (1002) a reorientation locking mechanism (210) of the wheel assembly (200),
- arranging (1004) the wheel assembly (200) in a first orientation in relation to a wheel assembly rotation axis (A3) corresponding to a use state, and/or
- arranging (1006) the wheel assembly (200) in a second orientation corresponding to a releasable state of the wheel assembly (200) from the multipurpose carrier (100), and/or
- arranging (1008) the wheel assembly (200) in a third orientation corresponding to a stowed state of the wheel assembly (200).

## Patentansprüche

1. Mehrzweckträger (100), der zum Transportieren eines oder mehrerer Passagiere und/oder von Fracht durch ein Schieben oder ein Ziehen des Trägers (100) konfiguriert ist, der Mehrzweckträger (100) Folgendes umfassend:
- ein Gestell (106), das die lasttragende Struktur des Trägers (100) ausbildet,
- mindestens drei Räder (104, 204), die dem Gestell (106) zugeordnet sind, wobei mindestens ein Rad (204) Teil einer Radanordnung (200) ausbildet, umfassend eine Basis (202) in Bezug auf die sich das Rad (204) um mindestens eine erste Raddrehachse (A1) drehen kann, wobei die Radanordnung (200) konfiguriert ist, um in Bezug auf den Mehrzweckträger (100) in mindestens einer ersten Ausrichtung in Bezug auf eine Radanordnungsdrehachse (A3), in der sich das Rad (204) der Radanordnung (200) in einem Gebrauchszustand befindet, und in einer zweiten Ausrichtung und einer dritten Ausrichtung um die Radanordnungsdrehachse (A3) eingerichtet zu werden, wobei die erste Ausrichtung von der zweiten Ausrichtung durch eine Winkeltrennung der Radanordnung (200) um die Radanordnungsdrehachse (A3) getrennt ist und die erste Ausrichtung von der dritten Ausrichtung durch eine Winkeltrennung der Radanordnung (200) um die Radanordnungsdrehachse (A3) getrennt ist, und wobei die Radanordnung (200) in der zweiten Ausrichtung davon von dem Mehrzweckträger (100) lösbar ist und wobei sich die Radanordnung (200) in der dritten Ausrichtung davon in einem verstauten Zustand befindet.

2. Mehrzweckträger (100) nach Anspruch 1, wobei die erste Ausrichtung und die zweite Ausrichtung der Radanordnung (200) winkelmäßig um zwischen 30° und 120°, vorzugsweise etwa 90°, voneinander getrennt sind.

3. Mehrzweckträger (100) nach Anspruch 1 oder 2, wobei die dritte Ausrichtung der Radanordnung (200) winkelmäßig von der ersten Position um etwa 180° getrennt ist.

4. Mehrzweckträger (100) nach einem der vorstehenden Ansprüche, wobei die Radanordnung (200) konfiguriert ist, um von der ersten Position in die zweite Position und/oder in die dritte Position gedreht zu werden, wobei sich das Rad (204) der Radanordnung (200) entlang eines Bogens nur in einer vertikalen Aufwärtsrichtung bewegt.

5. Mehrzweckträger (100) nach einem der vorstehenden Ansprüche, wobei die Radanordnung (200) ein Spannelement (210) umfasst, wobei das Spannelement (210) konfiguriert ist, um eine Vorspannkraft zwischen der Basis (202) und einer entsprechenden Radanordnungsbefestigung (108) auf dem Mehrzweckträger (100) in einer Richtung bereitzustellen, die die Basis (202) gegen die Radanordnungsbefestigung (108) drückt.

6. Mehrzweckträger (100) nach einem der vorstehenden Ansprüche, wobei die Radanordnung (200) ein Sicherungselement (212) umfasst, das konfiguriert ist, um durch eine entsprechende erste Öffnung (114) in einer Radanordnungsbefestigung (108) auf dem Mehrzweckträger (100) in mindestens der zweiten Ausrichtung der Radanordnung (200) bewegt zu werden, und wobei das Sicherungselement (212) in mindestens der ersten Ausrichtung der Radanordnung (200) konfiguriert ist, um an einer Anlageoberfläche (116) auf dem Mehrzweckträger (100) eingreifbar zu sein.

7. Mehrzweckträger (100) nach Anspruch 6, wenn abhängig von Anspruch 5, wobei das Sicherungselement (212) auf dem Spannelement (210) eingerichtet ist.

8. Mehrzweckträger (100) nach Anspruch 7 oder 6, wenn abhängig von Anspruch 5, wobei die Anschlagoberfläche (116) auf einem elastischen Element (112) eingerichtet ist, das konfiguriert ist, um durch den Eingriff des Sicherungselements (212) bei Bereitstellung der Vorspannkraft durch das Spannelement (210) elastisch verformt zu werden.

9. Mehrzweckträger (100) nach Anspruch 8, wobei die erste Öffnung (114) in dem elastischen Element (112) eingerichtet ist und eine zweite Öffnung (120) in der Radanordnungsbefestigung (108) bereitgestellt ist, durch die die erste Öffnung (114) zugänglich ist.

10. Mehrzweckträger (100) nach Anspruch 9, wobei das Sicherungselement (212) durch die zweite Öffnung (120) in einer beliebigen Ausrichtung der Radanordnung (200) um die Radanordnungsdrehachse (A3) herum bewegbar ist.

11. Mehrzweckträger (100) nach einem der vorstehenden Ansprüche, wobei das Rad (204) der Radanordnung (204) derart in einer Lenkrollenkonfiguration eingerichtet ist, dass sich das Rad (204) um eine zweite Raddrehachse (A2) in Bezug auf die Basis (202) drehen kann.

12. Mehrzweckträger (100) nach Anspruch 11, ferner umfassend einen Drehverriegelungsmechanismus (240), der Drehverriegelungsmechanismus umfassend (240) ein Verriegelungselement (232), das in eine entsprechende erste Verriegelungsaussparung (236) derart eingreifen kann, dass eine Drehung des Rads (204) um die zweite Raddrehachse (A2) verhindert wird, wobei das Verriegelungselement (232) konfiguriert ist, um automatisch in die erste Verriegelungsaussparung (236) einzugreifen, mindestens wenn sich die Radanordnung (200) in einer dritten Ausrichtung befindet, die winkelmäßig von der ersten Ausrichtung um etwa 180° getrennt ist, und sich automatisch aus der ersten Verriegelungsaussparung (236) auszukuppeln, mindestens wenn sich die Radanordnung (200) in der ersten Ausrichtung befindet.

13. Mehrzweckträger (100) nach Anspruch 12, wobei das Verriegelungselement (232) konfiguriert ist, um durch die Schwerkraft automatisch in die erste Verriegelungsaussparung (236) einzugreifen und sich daraus auszukuppeln.

14. Mehrzweckträger (100) nach Anspruch 12 oder 13, wobei das Verriegelungselement (232) eine Vielzahl von reibungsreduzierenden Elementen (238) umfasst und/oder wobei das Verriegelungselement (232) aus einem Material produziert ist, das eine Materialdichte zwischen 3 g/cm³ und 15 g/cm³, vorzugsweise zwischen 6 g/cm³ und 8 g/cm³ aufweist.

15. Verfahren (1000) zum Neukonfigurieren eines Mehrzweckträgers (100) nach einem der vorstehenden Ansprüche, das Verfahren (1000) umfassend die Schritte:
- Einstellen (1002) eines Neuausrichtungs-Verriegelungsmechanismus (210) der Radanordnung (200),
- Einrichten (1004) der Radanordnung (200) in einer ersten Ausrichtung in Bezug auf eine Radanordnungsdrehachse (A3), die einem Gebrauchszustand entspricht, und/oder
- Einrichten (1006) der Radanordnung (200) in einer zweiten Ausrichtung, die einem lösbaren Zustand der Radanordnung (200) von dem Mehrzweckträger (100) entspricht, und/oder
- Einrichten (1008) der Radanordnung (200) in einer dritten Ausrichtung, die einem verstauten Zustand der Radanordnung (200) entspricht.

## Revendications

1. Support polyvalent (100) conçu pour transporter un ou plusieurs passagers et/ou une cargaison en poussant ou en tirant le support (100), le support polyvalent (100) comprenant :
- un châssis (106) formant la structure porteuse du support (100),
- au moins trois roues (104, 204) associées au châssis (106), dans lequel au moins une roue (204) fait partie d'un ensemble roue (200) comprenant une base (202) par rapport à laquelle la roue (204) peut tourner autour d'au moins un premier axe de rotation de la roue (A1), dans lequel l'ensemble roue (200) est conçu pour être agencé par rapport au support polyvalent (100) dans au moins une première orientation par rapport à un axe de rotation de l'ensemble roue (A3) dans lequel la roue (204) de l'ensemble roue (200) est agencée dans un état d'utilisation et dans une deuxième orientation et une troisième orientation autour de l'axe de rotation de l'ensemble roue (A3), la première orientation étant séparée de la deuxième orientation par une séparation angulaire de l'ensemble roue (200) autour de l'axe de rotation de l'ensemble roue (A3) et la première orientation étant séparée de la troisième orientation par une séparation angulaire de l'ensemble roue (200) autour de l'axe de rotation de l'ensemble roue (A3), et dans lequel l'ensemble roue (200) dans sa deuxième orientation est libérable à partir du support polyvalent (100) et dans lequel l'ensemble roue (200) dans sa troisième orientation est à l'état rangé.

2. Support polyvalent (100) selon la revendication 1, dans lequel la première orientation et la deuxième orientation de l'ensemble roue (200) sont séparées angulairement de 30° à 120°, de préférence d'environ 90°.

3. Support polyvalent (100) selon la revendication 1 ou 2, dans lequel la troisième orientation de l'ensemble roue (200) est séparée angulairement de la première position d'environ 180°.

4. Support polyvalent (100) selon l'une quelconque des revendications précédentes, dans lequel l'ensemble roue (200) est conçu pour être tourné de la première position vers la deuxième position et/ou vers la troisième position avec la roue (204) de l'ensemble roue (200) se déplaçant le long d'un arc uniquement dans une direction verticale vers le haut.

5. Support polyvalent (100) selon l'une quelconque des revendications précédentes, dans lequel l'ensemble roue (200) comprend un élément de tension (210), l'élément de tension (210) étant conçu pour fournir une force de précontrainte entre la base (202) et une fixation de l'ensemble roue correspondante (108) sur le support polyvalent (100) dans une direction pressant la base (202) contre la fixation de l'ensemble roue (108).

6. Support polyvalent (100) selon l'une quelconque des revendications précédentes, dans lequel l'ensemble roue (200) comprend un élément de fixation solide (212) conçu pour être mobile à travers une première ouverture correspondante (114) dans une fixation de l'ensemble roue (108) sur le support polyvalent (100) dans au moins la deuxième orientation de l'ensemble roue (200), et dans lequel l'élément de fixation solide (212) dans au moins la première orientation de l'ensemble roue (200) est conçu pour être en prise contre une surface de butée (116) sur le support polyvalent (100).

7. Support polyvalent (100) selon la revendication 6 lorsqu'il dépend de la revendication 5, dans lequel l'élément de fixation solide (212) est agencé sur l'élément de tension (210).

8. Support polyvalent (100) selon la revendication 7 ou 6 lorsqu'elle dépend de la revendication 5, dans lequel la surface de butée (116) est agencée sur un élément élastique (112) conçu pour être déformé de manière élastique par la mise en prise de l'élément de fixation solide (212) lors de la fourniture de la force de précontrainte par l'élément de tension (210).

9. Support polyvalent (100) selon la revendication 8, dans lequel la première ouverture (114) est agencée dans l'élément élastique (112) et une seconde ouverture (120) est fournie dans la fixation de l'ensemble roue (108) à travers laquelle la première ouverture (114) est accessible.

10. Support polyvalent (100) selon la revendication 9, dans lequel l'élément de fixation solide (212) peut être déplacé à travers la seconde ouverture (120) dans toute orientation de l'ensemble roue (200) autour de l'axe de rotation de l'ensemble roue (A3).

11. Support polyvalent (100) selon l'une quelconque des revendications précédentes, dans lequel la roue (204) de l'ensemble roue (204) est agencée dans une configuration de roulette de telle sorte que la roue (204) peut tourner autour d'un second axe de rotation de roue (A2) par rapport à la base (202).

12. Support polyvalent (100) selon la revendication 11, comprenant en outre un mécanisme de verrouillage de rotation (240), le mécanisme de verrouillage de rotation (240) comprenant un élément de verrouillage (232) pouvant être en prise dans un premier renfoncement de verrouillage (236) correspondant de telle sorte que la rotation de la roue (204) autour du second axe de rotation de la roue (A2) est empêché, dans lequel l'élément de verrouillage (232) est conçu pour être automatiquement en prise dans le premier renfoncement de verrouillage (236) au moins lorsque l'ensemble roue (200) est dans une troisième orientation séparée angulairement de la première orientation d'environ 180° et automatiquement désolidarisé du premier renfoncement de verrouillage (236) au moins lorsque l'ensemble roue (200) est dans la première orientation.

13. Support polyvalent (100) selon la revendication 12, dans lequel l'élément de verrouillage (232) est conçu pour être automatiquement en prise et désolidarisé du premier renfoncement de verrouillage (236) par la force de gravité.

14. Support polyvalent (100) selon la revendication 12 ou 13, dans lequel l'élément de verrouillage (232) comprend une pluralité d'éléments de réduction de friction (238) et/ou dans lequel l'élément de verrouillage (232) est fabriqué à partir d'un matériau dont une densité de matériau est comprise entre 3 g/cm³ et 15 g/cm³, de préférence entre 6 g/cm³et 8 g/cm³.

15. Procédé (1000) permettant de reconfigurer un support polyvalent (100) selon l'une quelconque des revendications précédentes, le procédé (1000) comprenant les étapes consistant à :
- régler (1002) un mécanisme de verrouillage de réorientation (210) de l'ensemble roue (200),
- agencer (1004) l'ensemble roue (200) dans une première orientation par rapport à un axe de rotation de l'ensemble roue (A3) correspondant à un état d'utilisation, et/ou
- agencer (1006) l'ensemble roue (200) dans une deuxième orientation correspondant à un état libérable de l'ensemble roue (200) à partir du support polyvalent (100), et/ou
- agencer (1008) l'ensemble roue (200) dans une troisième orientation correspondant à un état de rangement de l'ensemble roue (200).
